# EUROPEAN PATENT SPECIFICATION

(11) **EP 1 861 985 B1**
(45) Date of publication and mention of the grant of the patent: **24.02.2010**
(21) Application number: 05722105.3
(22) Date of filing: 22.03.2005
(51) Int. Cl.: H04L 29/08, H04Q 3/00, H04L 12/24

(54) **METHOD AND ARRANGEMENT FOR SERVICES RUNNING ON SERVICE EXECUTION PLATFORM**
VERFAHREN UND ANORDNUNG FÜR AUF EINER DIENSTAUSFÜHRUNGSPLATTFORM ABLAUFENDE DIENSTE
PROCEDE ET SYSTEME D'EXECUTION DE SERVICES DANS UNE PLATE-FORME D'EXECUTION DE SERVICE

(43) Date of publication of application: 05.12.2007
(73) Proprietor: Telefonaktiebolaget LM Ericsson (publ), 164 83 Stockholm (SE)
(72) Inventor: HUSA, Knut Eilif, N-3070 Sande i Vestfold (NO)
(74) Representative: Norin, Klas
(86) International application number: PCT/NO2005/000103
(87) International publication number: WO 2006/101397

(56) References cited:
- EP-A- 1 221 818
- US-A1- 2003 108 000
- US-A1- 2003 133 554
- US-A1- 2004 073 566
- US-A1- 2005 044 197

## Description

### Field of the Invention

The present invention discloses a method and an arrangement which provides high availability and robustness to services running on service execution platform, and uses external sources to fulfil the information need for the service (e.g. weather forecast delivered by MMS).

### Background of the invention

Today it is common that end users subscribes to services for use/deliverance to their handheld devices such as their mobile phone or their PDA. These services may typically be positioning services, weather services or any other information service. In the following the wording VAS, value added service, will be used for these kind of services delivered to handheld devices.

Today a typical VAS service uses service components external to its own service execution environment. The VAS service then typically, subscribes for information provided by the external service. If one of these external service components is malfunctioning, it puts the overall service out of order. For this invention to be applicable we assume that there exist several external service components that can provide the requested information. Typical examples of such services will be weather forecast, share prices, map data, route planning, etc.

An example is a weather forecast service that gives the user the weather report at the user's current location. This service forwards the mobile subscribers position to the weather forecast service, which returns the weather forecast in the requested area. If the weather service is out of order, the overall service cannot fulfil its execution.

The problem today is that there is no mechanism that ensures availability of VAS services independent of external service components. Although some of the problems are addressed in the below referenced patent publication it does not ensure a satisfactory combination of robustness, availability and implementation simplicity.

Related art within this technical field is disclosed e.g. in US 2005/0044197, describing how to use a structured methodology to provide a reliable and available Web service architecture.

WO 20004925 describes a solution that chooses distribution channels based on a comparison of identifiers with reference values. However it does not describe any kind of well functioning pinging between a numbers of third part service providers such as positioning providers hence there is no mechanism ensuring that the needed components are fulfilling the needed quality of service.

Further it is known that BEA Weblogic one of the main providers of application servers on the market has a product BEA Weblogic Integration in their product portfolio specifically targeting business integration. By use of controls it is possible to access remote service components exposed as a Web service.

Thus from the discussion above it should be obvious that there is a need for a method that provides high availability and robustness to services running on service execution platform, and uses external sources to fulfil the information need for the service.

### Summary Of the invention

The features as defined by the independent claim enclosed characterize this arrangement and method.

In particular it is disclosed a method for providing high availability and high robustness for services running on service execution platforms, specified in the step of categorizing external service components according to their service types, such as weather and/or position services, where the method further comprises at least one of the following steps: registration of all the external service components into a list of objects representative of their type of service, and sending from a service platform a heartbeat function for checking and registration of the current status of the service components.

Further it is disclosed a communication arrangement adapted to provide high availability and high robustness for services running on service execution platforms, comprising service components categorized according to different service types, such as weather and/or position, specified in that the arrangement further comprises:
a) a one or more handheld communication device adapted to communicate with a service platform,
b) a service platform including VAS services and a VAS robustifying mechanism adapted to communicate with the one or more handheld communication device and to communicate with one or more 3^{rd} party service providers, and
c) a one or more 3^{rd} party service providers adapted to communicate with the service platform.

### Brief Description of the drawings

In order to make the invention more readily understandable, the discussion that follows will refer to the accompanying drawing.

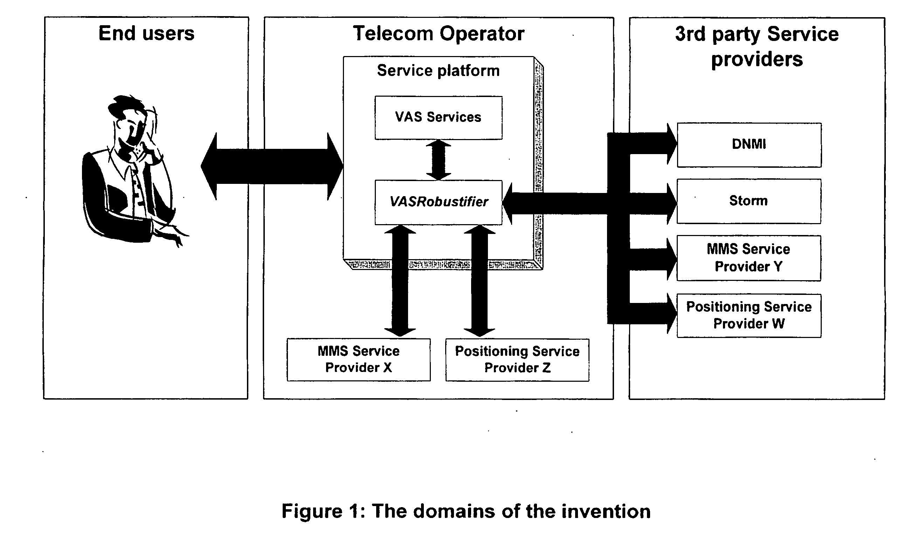

Figure 1 shows the domains of the invention,
Figure 2 shows Operator network,
Figure 3: Getting status of service components and usage,

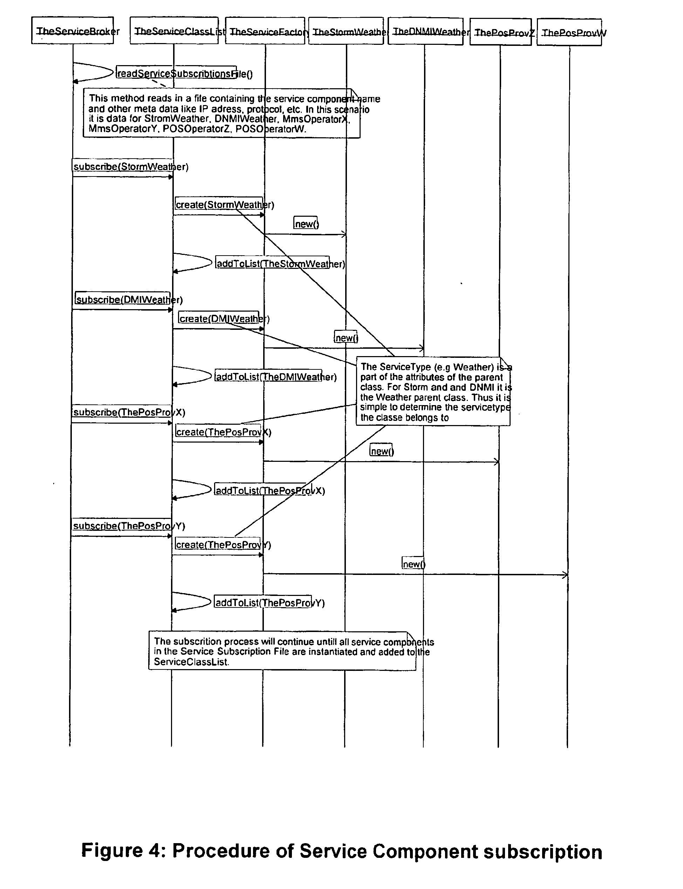

Figure 4: Procedure of Service Component subscription,

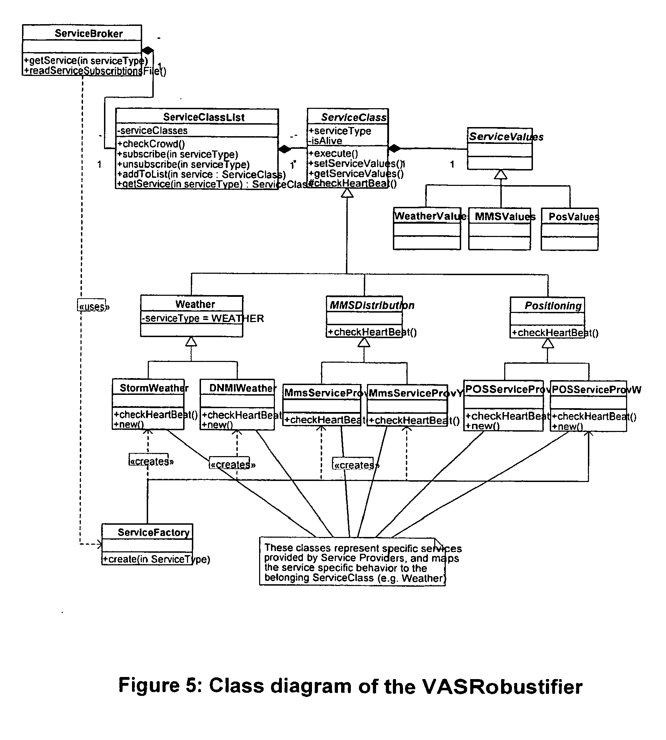

Figure 5: Class diagram of the VASRobustifier,

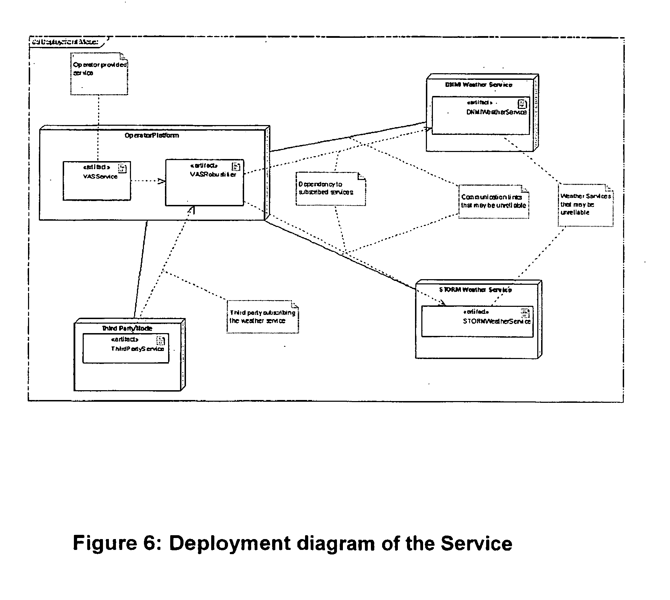

Figure 6: Deployment diagram of the Service.

### Detailed description of the invention

In the following the present invention will be discussed by describing a preferred embodiment, and by referring to the accompanied drawings.

Today's VAS solutions often use service components outside its own execution domain. Thus the service chain is jeopardized if invoked service components are unreliable. The present invention solidifies the entire service environment by registering all available external components and generalising them into "service classes". Hence, e.g. all positioning providers or all weather-report providers are put under the Class Position and Weather respectively. Heart-beat and status checks in combination with a certain degree of service redundancy ensure that the best-available service component under each class is invoked, leading to optimal service chain reliability and, in the end, to a higher QoS for the end user.

The core of the present invention is in an intelligent way to combine many providers of one and the same type of service, with service health-checks i.e. what is the present status of these services.

Among its main technical features is its mechanism that robustifies VAS services independently of unreliable service components.
- The invention will robustify and increase QoS of VAS services dependant of external service components.
- The invention hides the complexity of ensuring robust service quality for the overall service.
- The invention provides a uniform way of providing high availability and robustness for heterogeneous service components.
- The present invention provides high availability to services that normally uses unreliable service components.

The invention is implemented as a software update of the service execution environment.

### A first preferred embodiment of the invention

In the following a first preferred embodiment of the invention will be described, with reference to the accompanied drawings.

As indicated in the previous section the solution to the problems created by the unstable service providers were to firstly, take advantage of the redundancy among the services provided by service providers, secondly to implement a mechanism that in an efficient way is polling or pinging each and every of the service providers for their health.

A more detailed description of the control/health check mechanism will be given in the following as will the principle of redundancy by way of example.

All external service components will be registered in this mechanism, and generalised into an abstracted service class. E.g. imagine the weather forecast companies "First Weather Service" and the "second Weather Service" both will be members of the service class WEATHER. The mechanism will also contain a heartbeat function that checks whether the service components (e.g. First Weather Service) are alive. The current status of the service components will be registered.

The overall services will consist of service classes such as WEATHER, POSITIONING and many more, and it will not take into consideration which actual components are accessed. The overall service will get a reference to a functioning service component fulfilling the functional requirements from the overall service. If, for example, First Weather service is out of order, the overall service will get a reference to another registered component in the requested WEATHER service class (e.g. SECOND weather service).
shows the different domains involved in the context of the invention (end users, telecom operator, and 3^{rd} party service providers), and where a *VASRobustifier* (a service broker) resides. The end user will typically access a service in the telecom operator's service platform, and the service platform will use the VASRobustifier to ensure that the VAS services use well-working service components provided by either internal or external service providers.

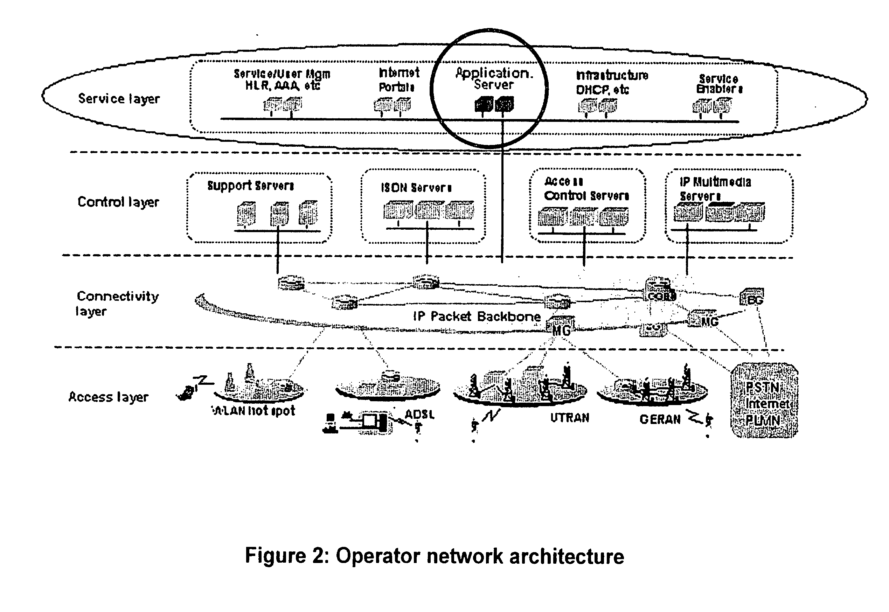

Figure 2 shows the architecture of an operator network. The VASRobustifier will in such a picture typically reside in the Application Server nodes (typically based on J2EE or .NET technology) indicated by the circle on the service layer.

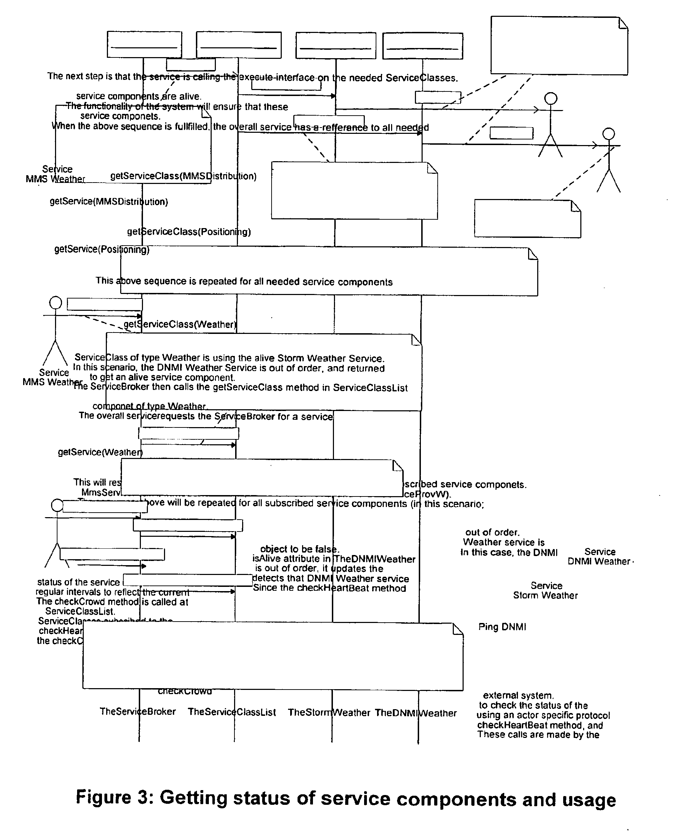

Figure 3 describes the process of getting the status of all subscribed service components, and an example of usage. The process starts with a request for a health check from the ServiceBroker to the class containing a list of service components (the ServiceClassList). One simple way of performing the health check is to ping each subscribed component. This might however, not be sufficient as the service can reside behind firewalls not allowing the ping protocol. Further, a positive response on a ping request does not ensure a working service; it only gives an indication that the node that is running the service is reachable. For even better control of the service status, it is feasible to actually request the service through the service interface. The ServiceClassList will then request each subscribed service components to perform a health check of the component. The statuses of the service components are stored in the ServiceClassList. In the example is the SECOND Weather service out of order.

The other process described in Figure is usage of the VASRobustifier to retrieve well-working service components. The ServiceBroker gets a request from a VAS service for a service component of type *Weather*. This request is forwarded to the ServiceClassList, which will return a reference to a working weather service component (in this scenario; First Weather Service). The same process is repeated for MMS and location.

The invention has thus, removed the subscribed services as a single point of failure. The VASRobustifier runs in an operator-controlled environment, and the probability that it fails will be much lower than the probability that one of the subscribed services fails. Hence, we have gained a better availability of the over-all service.

The mechanism can also be extended to support prioritisation of equal service components based on different parameters. E.g. one service component has historically better Quality of Services, is cheaper, more reliable data, etc. The health check process described above can be used to gather statistical data serving as a basis for the prioritisation task. The two boxes of the following figure shows an example where weather services are assigned priorities for instance based on response times.

| | | | | |
|---|---|---|---|---|
| | | | | |
| | The second | | The first | |
| | weather service | | weather service | |
| | Priority = 1 | | Priority = 2 | |
| | | | | |

### Figure: Example of priorities assigned to weather services

### Subscription of Service Components

Figure below describes the subscription procedure for the service components to the VASRobustifier.

All relevant data of the service components offered by the VASRobustifier mechanism are read in to the system at start-up. The ServiceClassList component will then use this information to create an instance of all ServiceClasses interfacing different service components.

The procedure will create an instance, a ServiceClass for each subscribed service component.

Distributed services may represent similar information in different ways. An example is that the SECOND Weather Service returns temperatures in Celsius degrees while the First Weather Service uses Fahrenheit degrees to indicate the same property. The ServiceClass responsibility is to map the set of properties of the subscribed service, e.g. the First Weather Service, to the set of VASRobustifier *Weather* properties.

### Class diagram

Figure below shows a model of the main classes of the VASRobustifier and the relation between them. The use of abstraction, inheritance and association is the main driver of the realization of the VASRobustifier.

### Deployment Diagram

Figure shows a deployment diagram of the VASRobustifier. It will typically reside in an operator controlled domain and subscribe services that are in domains where the operator has no control. Although the invention does not specifically mention any access technology, the VASRobustifier will typically use Web Services both as a means of interacting with the subscribed service components and exposing its own interface. Further, the VASRobustifer may be implemented as a server component using component integration technologies such as Java Connector Architecture (JCA). This will make it easy to integrate the VASRobustifer into existing service platforms, as most of them are based on standardized technology such as J2EE.

### Advantages

The mechanism described above will robustify and increase QoS of VAS services dependant of external service components.

The invention hides the complexity of ensuring robust service quality for the overall service.

The invention provides a uniform way of providing high availability and robustness for heterogeneous service components.

The invention will provide high availability to services that normally uses unreliable service components.

In the previous sections the present invention has been described by way of examples, particularly an example using a health check mechanism as known from Java has been shown, however it is obvious that any mechanism that performs a polling process where the polling/pinging is sent from a sender to a number of services categorised into groups or classes according to their services, where the polling is effectuated between redundant services within separated classes or groups is possible. The use of checkCrowd and checkHeartBeat and the actor specific protocol is merely meant for making the present invention more readily understandable.

### Abreviation

- MMS: Multimedia Messaging
- POS: Positioning System
- VAS: Value Added Services

## Claims

1. A method for providing high availability and high robustness for services running on service platforms, wherein service components are categorized according to their service types, the method comprising communication with one or more hand-held communication devices and one or more third party service providers, and further **characterized in** the following steps:
a) registration of all the service components into a list of objects representative of their type of service, and
b) sending from a service platform a heartbeat for checking and registration of the current status of the service components, wherein a mechanism adapted to robustify a Value Added Service sends one or more health check requests to at least a substantial fraction of the service components, the step of sending comprising:
- pinging each service component to check if the services are running on an available node, or requesting the service through the service interface;
- deriving the status of each service component from the health check response and storing in the object representing the service component; and
- using the response from the health check request process as a basis for prioritization among service components of the same service type.

2. A method according to claim 1, more third party service providers, and further **characterized** the step of categorizing the service components into at least one of the following service types:
a) weather forecast,
b) share prices,
c) map data, or
d) route planning.

3. A method according to claim 1, **characterized in** deriving status of service components of the same service type from different parameters such as
a) Quality of Service,
b) cost,
c) reliable data or information, or
d) response time.

4. A method according to claim 1, **characterized in that** at creation of an object representing the service component insert this object into a list of objects representing the service components.

5. A method according to claim 4, **characterized in** a step of mapping all properties from the service component to a common set of properties, defined centrally by a mechanism adapted to robustify Value Added Services, the object representing the service component contains the mapping.

6. A method according to claim 1, **characterized in that** the method comprises the step of establishing external services said services running outside the service execution platform.

7. A method according to claim 6, **characterized in that** the method comprises the step of:
establishing services provided from third parties outside a service provider domain, or establishing services running inside the service provider domain.

8. A method according to claim 1 or 2, **characterized in that** the method establishes Value Added Services as high level services dependent on low level service types to provide its own service.

9. A method according to claim 8, **characterized in that** the method establishes a Value Added Service where the Value Added service provides weather information for a user location dependent on the low level services types; mobile location and weather information.

10. A method according to any of the claim 1 - 9, **characterized in that** the method includes the step of:
a) Value Added Services requests information from a 3<rd> party service components, and the 3<rd> party service components responds, and
b) the Value Added services running on a service execution platform contains a robustifier mechanism, and
c) the 3<rd> party Value Added services requests robustified services components from the robustifier mechanism, and
d) a end users requests the VAS services.

11. A method according to claim 10, **characterized in that** the robustifier mechanism uses a Web Services as a means of interacting with the service components.

12. A communication arrangement adapted to provide high availability and high robustness for services running on service platforms, comprising service components categorized according to their different service types, the arrangement comprising:
a) one or more handheld communication device adapted to communicate with a service platform,
b) a service platform including Value Added services and a Value Added Service robustifying mechanism adapted to communicate with the one or more handheld communication device and to communicate with one or more 3<rd> party service providers, and
c) one or more 3<rd>party service providers adapted to communicate with the service platform,
**characterized in that** the Value Added Service robustifying mechanism is further adapted to:
- registering the service components into a list of objects representative of their type of service,
- sending from a service platform a heart beat for checking and registration of the current status of the service components, comprising one or more health check requests to at least a substantial fraction of the service components, and
- deriving the status of each service component from the health check response and storing in the object representing the service component, using the response from the health check request process as a basis for prioritization among service components of the same service type.

13. A communication arrangement according to claim 12, **characterized in that** the 3<rd> party service provider environment contains application server node (s) adapted to use software component integration technologies like Java Connector Architecture, and software platforms based on J2EE or .Net technology.

14. An arrangement according to claim 12, **characterized in that** the service platform resides in the 3<rd> party service provider environment, such as telecom operator network and/or internet service provider network.

## Patentansprüche

1. Verfahren zum Bereitstellen von hoher Verfügbarkeit und hoher Robustheit für Dienste, die auf Dienstplattformen laufen, worin Dienstkomponenten gemäß ihren Diensttypen kategorisiert werden, wobei das Verfahren Kommunikation mit einer oder mehreren handgehaltenen Kommunikationseinrichtungen und einem oder mehreren drittseitigen Dienstprovidern umfasst und außerdem durch folgende Schritte **gekennzeichnet** ist:
a) Registrieren aller Dienstkomponenten in einer Liste von Objekten, die für ihren Diensttyp repräsentativ sind, und
b) Senden eines Heartbeats von einer Dienstplattform, um den gegenwärtigen Status der Dienstkomponenten zu prüfen und zu registrieren, worin ein Mechanismus, der dazu angepasst ist, einen Mehrwertdienst robust zu machen, eine oder mehrere Health-Check-Anforderungen an mindestens einen wesentlichen Bruchteil der Dienstkomponenten sendet, wobei der Schritt des Sendens Folgendes umfasst:
- Pingen einer jeden Dienstkomponente, um zu prüfen, ob die Dienste auf einem verfügbaren Knoten laufen, oder Anfordern des Dienstes durch die Dienstschnittstelle;
- Ableiten des Status einer jeden Dienstkomponente aus der Health-Check-Antwort und Speichern im Objekt, das die Dienstkomponente repräsentiert; und
- Verwenden der Antwort vom Health-Check-Anforderungsprozess als einer Basis für das Priorisieren von Dienstkomponenten desselben Diensttyps.

2. Verfahren nach Anspruch 1 mit mehr drittseitigen Dienstprovidern und außerdem durch den Schritt **gekennzeichnet**, die Dienstkomponenten in mindestens einen der folgenden Diensttypen zu kategorisieren:
a) Wettervorhersage,
b) Aktienkurse,
c) kartographische Daten, oder
d) Routenplanung.

3. Verfahren nach Anspruch 1, **gekennzeichnet durch** Ableiten des Status von Dienstkomponenten desselben Diensttyps aus verschiedenen Parametern wie beispielsweise:
a) Dienstgüte,
b) Kosten,
c) zuverlässige Daten oder Information, oder
d) Antwortzeit.

4. Verfahren nach Anspruch 1, **dadurch gekennzeichnet, dass** beim Erzeugen eines die Dienstkomponente repräsentierenden Objekts dieses Objekt in eine Liste von Objekten eingefügt wird, die die Dienstkomponenten repräsentieren.

5. Verfahren nach Anspruch 4, **gekennzeichnet durch** einen Schritt des Abbildens aller Eigenschaften von der Dienstkomponente auf eine gemeinsame Menge von Eigenschaften, die zentral **durch** einen Mechanismus definiert werden, der dazu angepasst ist, Mehrwertdienste robust zu machen, wobei das die Dienstkomponente definierende Objekt die Abbildung enthält.

6. Verfahren nach Anspruch 1, **dadurch gekennzeichnet, dass** das Verfahren den Schritt des Aufbauens externer Dienste umfasst, wobei die Dienste außerhalb der Dienstausführungsplattform laufen.

7. Verfahren nach Anspruch 6, **dadurch gekennzeichnet, dass** das Verfahren folgenden Schritt umfasst:
Aufbauen von Diensten, die drittseitig außerhalb einer Dienstproviderdomäne bereitgestellt werden oder Aufbauen von Diensten, die innerhalb der Dienstproviderdomäne laufen.

8. Verfahren nach Anspruch 1 oder 2, **dadurch gekennzeichnet, dass** das Verfahren Mehrwertdienste als High-Level-Dienste aufbaut, die von Low-Level-Diensttypen abhängen, um den eigenen Dienst bereitzustellen.

9. Verfahren nach Anspruch 8, **dadurch gekennzeichnet, dass** das Verfahren einen Mehrwertdienst aufbaut, wo der Mehrwertdienst Wetterinformation für einen Teilnehmerstandort bereitstellt, die von den Low-Level-Diensttypen abhängt; Mobilstandort und Wetterinformation.

10. Verfahren nach einem der Ansprüche 1 - 9, **dadurch gekennzeichnet, dass** das Verfahren folgenden Schritt umfasst:
a) Mehrwertdienste fordern Information von drittseitigen Dienstkomponenten an, und die drittseitigen Dienstkomponenten antworten, und
b) die auf einer Dienstausführungsplattform laufenden Mehrwertdienste enthalten einen Mechanismus zum Erzeugen von Robustheit, und
c) die drittseitigen Mehrwertdienste fordern robust gemachte Dienstkomponenten vom Mechanismus zum Erzeugen von Robustheit an, und
d) ein Endteilnehmer fordert die Mehrwertdienste (VAS) an.

11. Verfahren nach Anspruch 10, **dadurch gekennzeichnet, dass** das Verfahren zum Erzeugen von Robustheit Webdienste als ein Mittel zur Interaktion mit den Dienstkomponenten verwendet.

12. Kommunikationsanordnung, die dazu angepasst ist, hohe Verfügbarkeit und hohe Robustheit für Dienste bereitzustellen, die auf Dienstplattformen laufen, die gemäß ihren verschiedenen Diensttypen kategorisierte Dienstkomponenten umfassen, wobei die Anordnung umfasst:
a) eine oder mehrere handgehaltene Kommunikationseinrichtungen, die zum Kommunizieren mit einer Dienstplattform angepasst sind,
b) eine Dienstplattform, die Mehrwertdienste und einen Mechanismus zum Erzeugen von Mehrwertdienst-Robustheit enthält, der dazu angepasst ist, mit der einen oder mehreren handgehaltenen Kommunikationseinrichtungen zu kommunizieren und mit einem oder mehreren drittseitigen Dienstprovidern zu kommunizieren, und
c) einen oder mehrere drittseitige Dienstprovider, die zum Kommunizieren mit der Dienstplattform angepasst sind,
**dadurch gekennzeichnet, dass** der Mechanismus zum Erzeugen von Mehrwertdienst-Robustheit außerdem angepasst ist zum:
- Registrieren der Dienstkomponenten in einer Liste von Objekten, die für ihren Diensttyp repräsentativ sind,
- Senden eines Heartbeats von einer Dienstplattform, um den gegenwärtigen Status der Dienstkomponenten zu prüfen und zu registrieren, eine oder mehrere Health-Check-Anforderungen an mindestens einen wesentlichen Bruchteil der Dienstkomponenten umfassend, und
- Ableiten des Status einer jeden Dienstkomponente aus der Health-Check-Antwort und Speichern im die Dienstkomponente repräsentierenden Objekt unter Verwendung der Antwort vom Health-Check-Anforderungsprozess als einer Basis für das Priorisieren von Dienstkomponenten desselben Diensttyps.

13. Kommunikationsanordnung nach Anspruch 12, **dadurch gekennzeichnet, dass** die drittseitige Dienstproviderumgebung einen oder mehrere Anwendungsserverknoten enthält, die dazu angepasst sind, Softwarekomponenten-Integrationstechnologien wie Java Connector Architecture und auf J2EE oder .Net-Technology basierende Softwareplattformen zu benutzen.

14. Anordnung nach Anspruch 12, **dadurch gekennzeichnet, dass** die Dienstplattform in der drittseitigen Dienstproviderumgebung wie beispielsweise dem Telekommunikationsnetz und/oder dem Internet-Dienstprovidernetz residiert.

## Revendications

1. Procédé destiné à fournir une disponibilité et une fiabilité élevées pour des services mis en oeuvre sur des plateformes de service, dans lequel des composants de service sont catégorisés selon leurs types de service, le procédé comprenant une communication avec un ou plusieurs dispositifs de communication de poche et un ou plusieurs fournisseurs de services tiers, et en outre **caractérisé par** les étapes ci-dessous consistant à :
a) enregistrer la totalité des composants de service sur une liste d'objets représentatifs de leur type de service ; et
b) envoyer, à partir d'une plateforme de service, un battement de coeur permettant le contrôle et l'enregistrement de l'état en cours des composants de service, dans lequel un mécanisme apte à fiabiliser un service à valeur ajoutée envoie une ou plusieurs demandes de contrôle de bon fonctionnement à au moins une fraction substantielle des composants de service, l'étape d'envoi comprenant les étapes ci-dessous consistant à :
- interroger chaque composant de service pour vérifier si les services sont exploités sur un noeud disponible, ou demander le service via l'interface de service ;
- dériver l'état de chaque composant de service à partir de la réponse de contrôle de bon fonctionnement et le stocker dans l'objet représentant le composant de service ; et
- utiliser la réponse en provenance du processus de demande de contrôle de bon fonctionnement comme base pour établir des priorités parmi les composants de service du même type de service.

2. Procédé selon la revendication 1, comportant une pluralité de fournisseurs de services tiers, et en outre **caractérisé en ce qu'**il comporte l'étape consistant à catégoriser les composants de service en au moins l'un des types de service ci-dessous :
a) une prévision météorologique ;
b) des cours des actions ;
c) des données cartographiques ; ou
d) une planification d'itinéraires.

3. Procédé selon la revendication 1, **caractérisé en ce qu'**il comporte l'étape consistant à dériver l'état des composants de service du même type de service à partir de différents paramètres, tels que :
a) une qualité de service ;
b) un coût ;
c) des données ou informations fiables ; ou
d) un temps de réponse.

4. Procédé selon la revendication 1, **caractérisé en ce qu'**il comporte l'étape consistant à, lors de la création d'un objet représentant le composant de service, intégrer cet objet dans une liste d'objets représentant les composants de service.

5. Procédé selon la revendication 4, **caractérisé en ce qu'**il comporte une étape consistant à mettre en concordance l'ensemble des propriétés du composant de service et un ensemble commun de propriétés, définies de manière centralisée par un mécanisme apte à fiabiliser des services à valeur ajoutée, l'objet représentant le composant de service contenant la mise en concordance.

6. Procédé selon la revendication 1, **caractérisé en ce que** le procédé comporte l'étape consistant à établir des services externes, lesdits services étant mis en oeuvre en dehors de la plateforme d'exécution de service.

7. Procédé selon la revendication 6, **caractérisé en ce que** le procédé comporte l'étape ci-dessous consistant à :
établir des services délivrés par des tiers en dehors d'un domaine de fournisseur de services, ou établir des services mis en oeuvre au sein du domaine de fournisseur de services.

8. Procédé selon la revendication 1 ou 2, **caractérisé en ce que** le procédé établit des services à valeur ajoutée en qualité de services haut de gamme en fonction des types de services d'entrée de gamme pour fournir son propre service.

9. Procédé selon la revendication 8, **caractérisé en ce que** le procédé établit un service à valeur ajoutée dans lequel le service à valeur ajoutée fournit des informations météorologiques pour un emplacement d'utilisateur en fonction des types de services d'entrée de gamme, d'une localisation mobile et des informations météorologiques.

10. Procédé selon l'une quelconque des revendications 1 à 9, **caractérisé en ce que** le procédé comporte les étapes ci-dessous dans lesquelles :
a) les services à valeur ajoutée demandent des informations à partir des composants de service d'un tiers, et les composants de service tiers répondent ; et
b) les services à valeur ajoutée mis en oeuvre sur une plateforme d'exécution de service contiennent un mécanisme de fiabilisation ; et
c) les services à valeur ajoutée tiers demandent des composants de services fiabilisés en provenance du mécanisme de fiabilisation ; et
d) un utilisateur final demande les services à valeur ajoutée.

11. Procédé selon la revendication 10, **caractérisé en ce que** le mécanisme de fiabilisation utilise des services Internet comme moyens d'interagir avec les composants de service.

12. Agencement de communication apte à fournir une disponibilité et une fiabilité élevées pour des services mis en oeuvre sur des plateformes de service, comportant des composants de service catégorisés selon leurs types de service distincts, ledit agencement comprenant :
a) un ou plusieurs dispositifs de communication de poche apte(s) à communiquer avec une plateforme de service ;
b) une plateforme de service comportant des services à valeur ajoutée et un mécanisme de fiabilisation de services à valeur ajoutée apte à communiquer avec ledit un ou lesdits plusieurs dispositifs de communication de poche et à communiquer avec un ou plusieurs fournisseurs de services tiers ; et
c) un ou plusieurs fournisseurs de services tiers apte(s) à communiquer avec la plateforme de service,
**caractérisé en ce que** le mécanisme de fiabilisation de services à valeur ajoutée est en outre apte à :
- enregistrer les composants de service sur une liste d'objets représentatifs de leur type de service ;
- envoyer, à partir d'une plateforme de service, un battement de coeur permettant le contrôle et l'enregistrement de l'état en cours des composants de service, comportant une ou plusieurs demandes de contrôle de bon fonctionnement à au moins une fraction substantielle des composants de service, et
- dériver l'état de chaque composant de service à partir de la réponse de contrôle de bon fonctionnement et le stocker dans l'objet représentant le composant de service, et utiliser la réponse en provenance du processus de demande de contrôle de bon fonctionnement comme base pour établir des priorités parmi les composants de service du même type de service.

13. Agencement de communication selon la revendication 12, **caractérisé en ce que** l'environnement de fournisseur de services tiers comporte un ou plusieurs noeud(s) de serveur d'application apte(s) à utiliser des technologies d'intégration de composants logiciels telles que l'architecture de connecteur Java et des plates-formes logicielles basées sur la technologie J2EE ou .NET.

14. Agencement selon la revendication 12, **caractérisé en ce que** la plateforme de service est hébergée dans l'environnement de fournisseur de services tiers, comme, par exemple, un réseau d'opérateurs de télécommunication et/ou un réseau de fournisseurs de services sur Internet.
